# EUROPÄISCHE PATENTANMELDUNG

(11) **EP 2 860 021 A1**
(43) Veröffentlichungstag der Anmeldung: **15.04.2015**
(21) Anmeldenummer: 14003495.0
(22) Anmeldetag: 11.10.2014
(51) Int. Cl.: B29C 67/00, B29C 70/68

(54) **Dreidimensionaler Gegenstand mit wenigstens einer einen Innenraum umgebenden Wandung**

(30) Priorität: 11.10.2013 DE 102013220578
(71) Anmelder: Arburg GmbH + Co. KG, 72290 Lossburg (DE)
(72) Erfinder: Kraibühler, Herbert, 72290 Lossburg (DE); Duffner, Eberhard, 72181 Starzach (DE)
(74) Vertreter: Reinhardt, Harry

(57) **Zusammenfassung**

Ein dreidimensionaler Gegenstand (10) weist wenigstens eine einen Innenraum (12) umgebende Wandung (13) aus in situ selbsttätig verfestigten Tropfen (70) aus wenigstens einem Material auf, das im Ausgangszustand in einer fluiden Phase vorliegt oder verflüssigt werden kann. Dadurch, dass die Wandung (13) bei ihrer Herstellung in jedem Bauzustand selbsttragend ist, wobei der Gegenstand wenigstens einen Übergangsbereich (90) von einer Grundstruktur zu einer Überhangstruktur mit einem Winkel von größer gleich 60°, vorzugsweise größer gleich 70° aufweist, lässt sich ein dreidimensionaler Gegenstand auch bei komplexen Geometrien ohne weitere Hilfsmittel herstellen.

## Beschreibung

Die Erfindung betrifft einen dreidimensionalen Gegenstand mit wenigstens einer einen Innenraum umgebenden Wandung nach dem Oberbegriff des Anspruches 1.

In der Kunststoffteileherstellung werden durch Spritzgießen oder Extrudieren in großen Losgrößen und Serien Teile unter Verwendung von Formwerkzeugen exakt und formgerecht hergestellt. Der Vorteil insbesondere des Kunststoffspritzgießens beruht vor allem auf der hochgenauen Herstellung von komplexen Teilgeometrien, wobei optimal die Anforderungen an eine kostengünstige und wirtschaftliche Produktion von Kunststoffteilen abgedeckt werden. Ihre wirtschaftlichen Grenzen finden diese Verfahren einerseits, wenn nur noch kleine Serien oder Einzelanfertigungen erfolgen sollen. Eine andere Grenze besteht dann, wenn nicht miteinander kompatible Materialien verarbeitet werden müssen.

Für den Bereich der Stückzahl Eins oder kleinerer Losgrößen, wie zum Beispiel bei der Herstellung von Musterteilen mit der Anforderung einer kurzzeitigen Bereitstellung sowie Eigenschaften, die denen von spritzgegossenen Teilen ähnlich sind, sind Fertigungsverfahren bekannt, die weitläufig unter dem Begriff Prototyping, Rapid Manufacturing oder Adaptive Manufacturing bekannt sind. Die Herstellung solcher Teile erfolgt werkzeuglos, das heißt ohne Formwerkzeuge, in den meisten Fällen auf der Grundlage der Erzeugung einer Werkstück-Geometrie aus 3D-Daten auf unterschiedlichste Art und Weise z.B. durch Aufschmelzen von Pulverschichten durch Wärmeeintrag, z.B. mittels Laser, generative Systeme wie Druckverfahren in unterschiedlicher verbindender Form der Pulverteile oder auch im sogenannten Schmelzstrangverfahren. Pulververfahren kommen jedoch dann an ihre Grenzen, wenn mehrere verschiedene Materialkomponenten nebeneinander verarbeitet werden sollen oder Geometrien Überhänge oder nicht abstützbare Hohlräume aufweisen.

Aus der dem Oberbegriff des Anspruches 1 zugrunde liegenden WO 2012/171644 A1 ist in Weiterbildung der EP 1 886 793 A1 eine Vorrichtung bekannt, bei der eine in der Spritzgießtechnik bekannte Plastifiziereinheit an einen unter Druck setzbaren Materialspeicher für die fluide Phase wenigstens eines Materials angekoppelt wird. Eine derartige Plastifiziereinheit unterscheidet sich von den sonst bei der 3D-Fertigung üblichen Vorrichtungen, wie z.B. den beim 3D-Druck üblichen Druckköpfen, dadurch, dass keine vorgefertigten Materialien zugeführt werden. In der Spritzgießtechnik bedeutet ein Plastifizieren mittels einer Plastifiziereinheit eines Spritzaggregats nämlich ein Aufbereiten, Mischen und Homogenisieren des Ausgangsmaterials. Mit anderen Worten wird also das meist rieselfähige Ausgangsmaterial in den Aggregatzustand der Schmelze aufbereitet. Genau dies erfolgt auch erfindungsgemäß, so dass standardmäßig vorhandene Materialien verwendet werden können. Zur Erzeugung eines Gegenstands auf einem Objektträger wird dieses Material über eine Austrittsöffnung in Form von Tropfen ausgetragen. Aufgrund der Adhäsionskräfte des Materials sind dafür ein hoher Druck und hohe Schmelztemperaturen für das Material erforderlich, zumal der Tropfen zur Erzielung einer entsprechenden Oberflächenqualität eine Größe von 0,001 bis 0,05 mm³ bis zu 0,1 mm³ aufweisen soll. Bereits durch das Austragen der Tropfen werden verschiedene Teile des Gegenstands aneinander gefügt, indem die Tropfen nebeneinander ausgebracht und Tropfen für Tropfen in situ verfestigt werden. Die so erhaltenen geometrischen Verhältnisse bleiben beim Herstellungsprozess im Wesentlichen erhalten und entsprechen bereits dem Gegenstand. Aus der vom selben Anmelder stammenden WO 2013/017278 A1 ist es zudem bekannt, verschiedene Materialkomponenten bei der Herstellung eines Gegenstandes nebeneinander tropfenweise aufzubringen.

Ein Verfahren, das dem Rapid Prototyping zuzuordnen ist, ist aus der WO 2009/013751 A2 bekannt. Unter dem Oberbegriff "Solid Freeform Fabrication" werden dabei Methoden zur Herstellung unmittelbar aus Computerdaten erfasst, die z.B. ein dreidimensionales Drucken, ein Elektronenstrahlschmelzen, Stereolithographie, selektives Lasersintern, laminierte Objektherstellung und VDM umfassen. Mit diesen Verfahren können benachbarte Strukturen aus verschiedenen Materialien hergestellt werden. Das Ausbringen erfolgt allerdings nicht dadurch, dass Tropfen an Tropfen oder Tropfen an Strang aneinandergefügt werden, sondern dadurch, dass feste Materialien ausgebracht und anschließend unter zusätzlicher Energiezufuhr ausgehärtet werden. Wandungen, die einen Innenraum umschließen, lassen sich damit nicht herstellen, da die Materialien ohne Energiezufuhr die ausgebrachte Form nicht beibehalten können.

Aus der DE 696 23 489 T2 sind eine Vorrichtung und ein Verfahren zum schichtweisen Aufbau eines Gegenstands im Rapid Manufacturing unter Austrag von Tropfen bekannt. Um die Verarbeitungsfähigkeit des Materials zu gewährleisten, wird eine zusätzliche Kühlung benötigt. Durch Pixelversatz können auch Überhangstrukturen gefertigt werden, jedoch nur bis etwa 45°.

Aus der WO 2007/083372 A1 ist eine dentale Produktion von keramischen Materialien durch Tropfenauftrag bekannt, wobei eine Kinematik mit zwei Rotationsachsen dargestellt ist, auf der eine zahnähnliche Struktur aufgebaut wird.

Ausgehend von diesem Stand der Technik liegt der vorliegenden Erfindung die Aufgabe zugrunde, einen dreidimensionalen Gegenstand auch bei komplexen Geometrien ohne weitere Hilfsmittel herzustellen.

Diese Aufgabe wird durch einen Gegenstand mit den Merkmalen des Anspruches 1 gelöst.

Das Ausbringen des Materials erfolgt dabei Tropfen für Tropfen, wobei sowohl die Eigenschaften des Materials als auch das Material selbst von Tropfen zu Tropfen wechselnd aus- und aufgebracht werden kann. Am fertigen Bauteil ist dies bei entsprechender Vergrößerung des Bauteils dadurch erkennbar, dass die Tropfen für Tropfen aufgebrachte Oberfläche aus verfestigten Tropfen erkennbar ist, die selbsttätig verschmolzen sind. Erstellt wird damit eine Wandung, die einen Innenraum umgibt, der beliebig gestaltet bzw. ausgefüllt sein kann. Dieser Innenraum kann hohl oder mit einem Medium oder Einsatzteil gefüllt sein, er kann jedoch auch von einem Funktionselement eingenommen sein. Wesentlich ist, dass um diesen Innenraum herum die Wandung selbsttragend aufgebaut ist, wobei der Gegenstand wenigstens einen Übergangsbereich von Ausgangsstruktur zu einer Überhangstruktur mit einem Winkel von größer gleich 60°, vorzugsweise größer gleich 70° aufweist. Dennoch ist grundsätzlich auch oder zumindest in diesem Übergangsbereich kein Tropfenversatz erforderlich, da die Wandung aus kleinen Tropfen mit entsprechender Bindungswirkung gebildet ist. Dies gestattet einerseits ein schonendes Einbetten von Einlegeteilen oder allgemein Funktionselementen, ebenso ist es aber möglich ohne weitere Hilfsmittel zum Beispiel einen Hohlraum zu schließen oder selbst im rechten Winkel ausgehend von einem Träger oder einer Wandung weitere Anformungen als Überhangstrukturen vorzusehen. Dies ist bei anderen Verfahren im Stand der Technik, die nicht tropfenweise mit entsprechenden Materialien arbeiten schon deshalb nicht möglich, weil die Räume entweder wie zum Beispiel beim Lasersintern mit Pulver gefüllt sind oder weil wie beim Fadenaustragsverfahren das Teil nicht im Raum bewegt wird und für den Faden damit im letzten Teilbereich keine Stützfläche mehr vorhanden wäre. Zudem wird das Material nicht für den spezifischen Verwendungszweck individuell aufbereitet. Hier erfolgt dies nämlich durch die Verwendung einer aus der Spritzgießtechnik bekannten Plastifiziereinheit eines Spritzaggregats. In der Spritzgießtechnik wird eine derartige Plastifiziereinheit eines Spritzaggregats dazu eingesetzt, das Ausgangsmaterial aufzubereiten, zu mischen und zu homogenisieren, um damit auch Einfluss auf die Verarbeitungsfähigkeit des Materials unter bestimmten Randbedingungen, wie z.B. Druck und Temperatur zu nehmen. Mit anderen Worten wird also das meist rieselfähige Ausgangsmaterial in den Aggregatzustand der Schmelze aufbereitet. Genau dies kann auch erfindungsgemäß erfolgen, so dass standardmäßig vorhandene Materialien verwendet werden können. Vorzugsweise wird die Temperatur der Materialien an ihrem Verarbeitungsort am Gegenstand durch die Tropfengröße des einen Materials relativ zur Tropfengröße des anderen Materials und/oder durch den Abstand der Tropfen der verschiedenen Materialien zueinander beeinflusst. Durch diesen Einfluss lässt sich die Bindungswirkung der Materialien gezielt beeinflussen.

Die Wandung wird vorzugsweise erhalten durch ein Verfahren, bei dem mittels eines feststehenden Austragskopfes je zu verarbeitendem Material das Material ausgetragen wird, während der Gegenstand relativ dazu auf einer wenigstens fünf Achsen aufweisenden Geometrie gehalten ist. Dadurch kann der Gegenstand jeweils so unter dem Austragskopf bewegt werden, dass der nachfolgende Tropfen auf den bereits verfestigten Tropfen so aufgebracht werden kann, dass eine formgerechte selbsttragende Ausbildung möglich ist.

Selbst mehrere Materialien können nebeneinander platziert werden, selbst wenn sie eigentlich nicht miteinander kompatibel sind, also zum Beispiel Van-der-Waals-Kräfte aufweisen, oder die Materialien zum Beispiel nicht vermischbar sind. Da ein Vermischen grundsätzlich nicht stattfindet, sondern das Material Tropfen für Tropfen nebeneinander platziert wird, kann zumindest auf mikroskopischer Ebene eine formschlüssige Verbindung auch in derartigen Fällen erreicht werden.

Bei einer bevorzugten Ausgestaltung können Funktionselemente nicht nur einlegeteilgerecht, also schonend mit niedrigeren Temperaturen als zum Beispiel beim Spritzgießen eingebettet werden, es besteht zudem die Möglichkeit, diese Einlegeteile mit einer oder mehreren Materialkomponenten sicher zu verschließen. Es müssen nur entsprechende Anforderungen an den Verbindungsstellen verschiedener Komponenten gewährleistet werden. Wie bereits beschrieben können dabei verschiedene Materialien, gegebenenfalls auf mikroskopischer Ebene erkennbar, formschlüssig aneinander gereiht werden, um dadurch einen zuverlässigen Ein- oder Verschluss wie aus einem Stück im Bereich zwischen Wandung und Abdeckung zu erzeugen.

Da Materialien im Innenraum wie in einem Hohlraum während des Herstellungsverfahrens eingebunden werden, kann im Innenraum eines derartigen Hohlraums auch ein elektrisch leitfähiges Anschlussmaterial wie zum Beispiel Lötzinn z.B. tropfenweise eingebracht werden. In diesem Fall wird das Material auf dieselbe Art wie die anderen Materialien in den Innenraum gegeben, der im weiteren Herstellungsverfahren dann verschlossen wird. Dadurch lassen sich die Funktionselemente über aus dem Anschlussmaterial gebildete Leiterbahnen kontaktieren.

Vorzugsweise wird der Gegenstand auf einem am Objektträger geometrisch festlegbaren Werkstückadapter erhalten, der mit dem Gegenstand weitere Verarbeitungsprozesse durchlaufen kann. Er wird also zumindest vorübergehend zu einem Teil des Gegenstands. Damit kann eine weitere Verarbeitung z.B. eine mechanische Nachbearbeitung oder ein weiterer Fertigungsschritt z.B. ein Auftragen weiterer Materialschichten wie Lacke oder dergleichen erfolgen, wobei ein lagegerechtes Montieren oder ein Vorgang wie eine Vermessung des Werkstücks zur Qualitätssicherung möglich sind.

Weitere Vorteile ergeben sich aus den Unteransprüchen und der nachfolgenden Beschreibung bevorzugter Ausführungsbeispiele.

Im Folgenden wird die Erfindung anhand der beigefügten Figuren näher erläutert. Es zeigen:
- Fig. 1: einen Schnitt durch einen Gegenstand mit darin eingebetteten Funktionselementen,
- Fig. 2: eine Darstellung gemäß Fig. 1, wobei das Funktionselement in diesem Fall durch mehrere Materialien eingebettet ist,
- Fig. 3, 4: einen Schnitt durch einen Gegenstand mit einem darin angeordneten Funktionselement, wobei neben der Wandung eine Abdeckung aus einem anderen Material aufgebracht ist,
- Fig. 5a: ein an einem Gehäuse eingebettetes Funktionselement mit elektrischen Leiterbahnen,
- Fig. 5b: einen Schnitt nach Linie 5b-5b von Fig. 5a,
- Fig. 6a bis 6d: den schrittweisen Aufbau eines dreidimensionalen Gegenstands mit einer einen Innenraum umgebenden Wandung,
- Fig. 6e: einen Objektträger für die Herstellung eines Gegenstands,
- Fig.7: eine Vorrichtung zur Herstellung eines Gegenstands auf einem auf einer Fünfachsgeometrie angeordneten Objektträger mit angedeutetem Austragskopf.

### Beschreibung bevorzugter Ausführungsbeispiele

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

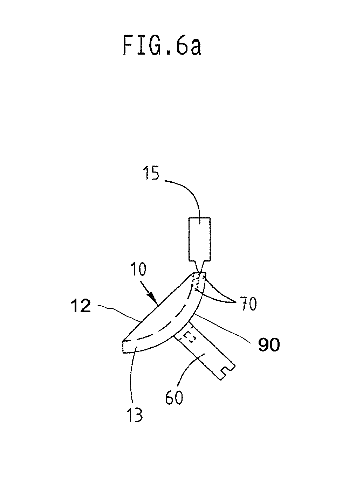

Die Figuren zeigen verschiedene dreidimensionale Gegenstände 10, 20, 20', 30, 40, 50 mit wenigstens einem Innenraum 12, der von einer Wandung 13 aus in situ selbsttätig verfestigten Tropfen 70 umgeben ist, die in Fig. 6a und 6c angedeutet sind. "In situ selbsttätig verfestigt" bedeutet dabei, dass die ausgetragenen Tropfen beim Ausbringen am Auftragsort direkt miteinander verschmelzen und keine zusätzliche Kühlung benötigt wird, so dass sich ein zumindest unter dem Mikroskop erkennbares Gefüge ergibt. Die Tropfen bestehen aus wenigstens einem Material gegebenenfalls auch aus mehreren Materialien, die tropfenweise vorzugsweise sequentiell nebeneinander platziert werden. Das Material liegt im Ausgangszustand in einer fluiden Phase vor oder kann verflüssigt werden, um es durch einen Austragskopf 15 auszubringen. Dieses Ausbringen erfolgt durch das sequentielle Austragen des Materials Tropfen für Tropfen mittels des feststehenden Austragskopfes 15, wie in Fig. 7 angedeutet, wobei je ein Austragskopf für jedes zu verarbeitende Material vorgesehen ist.

Während der Austragskopf stationär oder zumindest im Wesentlichen feststehend ist, sodass die Tropfen vorzugsweise in Richtung der Schwerkraft ausgetragen werden, bewegt sich der herzustellende Gegenstand 10, 20, 20', 30, 40, 50 bei seiner Herstellung relativ zum Austragskopf 15 auf einem vorzugsweise um wenigstens fünf Achsen bewegbaren Objektträger 100, wobei auch eine Bewegung um weniger Achsen je nach Gegenstand möglich ist. Dadurch kann der Gegenstand "unter" dem Austragskopf 15 so bewegt werden, dass ohne Einfluss eventueller Störkanten Tropfen für Tropfen platziert werden kann. So können sich die Tropfen 70 in situ selbsttätig von alleine verfestigen und die von den 3D- Daten ermittelte Geometrie des Gegenstandes wird erstellt.

Dadurch ist die Wandung 13 bei ihrer Herstellung in jedem Bauzustand selbsttragend. So können auch Übergangsbereich 90 von einer Ausgangsstruktur zu einer Überhangstruktur mit einem Winkel 91 von größer gleich 60°, vorzugsweise größer gleich 70° hergestellt werden, da die miteinander in situ verschmelzenden kleinen Tropfen mit einer Größe von nur 0,001 bis 0,1 mm³, vorzugsweise bis 05 mm³ sofort eine hohe Bindungswirkung entfalten. So kann auch in diesem Übergangsbereich 90 auf einen Tropfenversatz verzichtet werden. Unter einem Tropfenversatz wird dabei die bekannte Ausgestaltung von Überhangstrukturen z.B. mittels eines Voxelversatzes wie Pyramiden oder Kegeln verstanden, was bis zu Winkeln von gut 45° noch umsetzbar ist, darüber hinaus jedoch nicht. Unter einer Ausgangsstruktur wird dabei entweder eine bereits bestehende Struktur, wie z.B. ein Werkstückadapter 60 oder der bereits teilweise aufgebaute Gegenstand verstanden, an den dann eine Überhangstruktur, wie ein Vorbau, mit einem Winkel von mehr als 60° angebaut wird, so dass übliche Verfahren versagen.

Diese Eigenschaften führen dazu, dass im Gegensatz zu vorbekannten Verfahren im Stand der Technik beliebige, auch komplexe Formen erstellt werden können, ohne das zusätzliche Hilfsmittel wie Stützstrukturen oder Stützkörper erforderlich sind. Gleichzeitig können aber auch beliebige Materialien miteinander verarbeitet werden, worauf im Folgenden noch näher eingegangen wird.

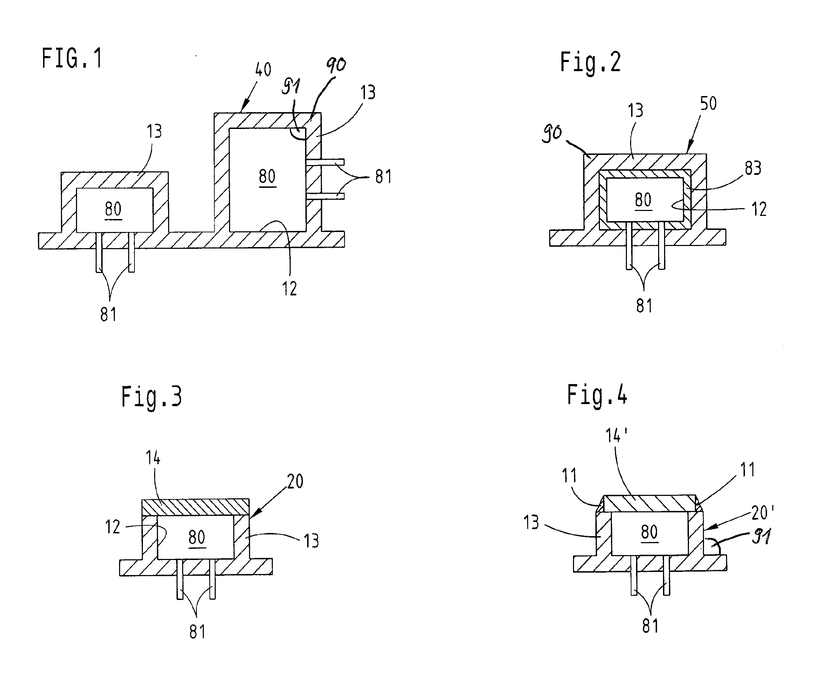

Gemäß Fig. 1 können in dem Innenraum 12 Funktionselemente 80 angeordnet werden, bei denen es sich z.B. um elektronische Bauteile mit entsprechenden Anschlüssen 81 handeln kann oder gegebenenfalls auch um im selben Verfahren hergestellte Komponenten. Die Wandung 13 bettet dabei das Funktionselement 80 formschlüssig ein, wobei auch die Wandung selbst aus mehreren formschlüssig miteinander verbundenen Materialien bestehen kann, die zumindest auf mikroskopischer Ebene formschlüssig sind. So lassen sich an sich nicht kompatible Materialien nebeneinander platzieren und miteinander verarbeiten, die z.B. aufgrund ihrer physikalischen und chemischen Eigenschaften üblicherweise nicht gemeinsam oder auch nebeneinander verarbeitet werden können. Entsprechend aufbereitet und hinsichtlich der Prozessparameter wie insbesondere der Temperatur materialspezifisch beeinflusst, ist dies jedoch möglich. Das Funktionselement 80 wird gemäß Fig.1 im Herstellungsprozess für den Gegenstand 40 Stück für Stück oder besser Tropfen für Tropfen formschlüssig eingebettet. Die genannten Übergangsbereiche 90 entstehen in den Figuren 1 bis 4 insbesondere an den Ecken.

Gemäß Fig. 2 können für die Herstellung des Gegenstandes 50 neben der Wandung 13 aus dem einen Material auch weitere Materialkomponenten wie die zweite Komponente 83 vorgesehen sein.

Beim Einbetten macht sich ein Vorteil des Verfahrens bemerkbar. Grundsätzlich ist es nämlich möglich das Material so zu beeinflussen, dass es optimale Eigenschaften auch hinsichtlich der Bautemperatur aufweist. Damit können die Funktionselemente 80 schonend eingebettet werden, das heißt es erfolgt ein einlegeteilgerechtes Einbetten auch unter entsprechenden Temperaturbedingungen.

Gemäß Fig. 3 und 4 können auch Gegenstände 20, 20' hergestellt werden, bei denen ein Einlegeteil wie das Funktionselement 80 mit ein oder zwei Komponenten sicher in situ verschlossen wird. In Fig. 3 werden dabei die Wandungen 13 aus einem Material erstellt und die Abdeckung 14 aus einem anderen Material. In Fig. 4 kann die Herstellung von Wandung 13 und Abdeckung 14' aus dem gleichen oder auch aus einem anderen Material erfolgen und es können ergänzend in der Übergangszone 11 Materialen aufgebracht werden, um eine sichere Verbindung zu erreichen. Ebenso kann die Abdeckung 14' ein weiteres Bauteil sein, das über die Übergangszone 11 an die Wandung 13 angeschlossen wird. Grundsätzlich ist es möglich, Wandung 13 und Abdeckung 14 aus einem Material oder auch aus mehreren Materialien herzustellen, wobei durch die tropfenweise Aneinanderreihung sich selbst verfestigender und dabei miteinander verschmelzender Tropfen in situ ein Verschluss des Funktionselements 80 so möglich ist, dass Wandung und Abdeckung wie ein Stück erscheinen, also zum Beispiel nahtlos ineinander übergehen.

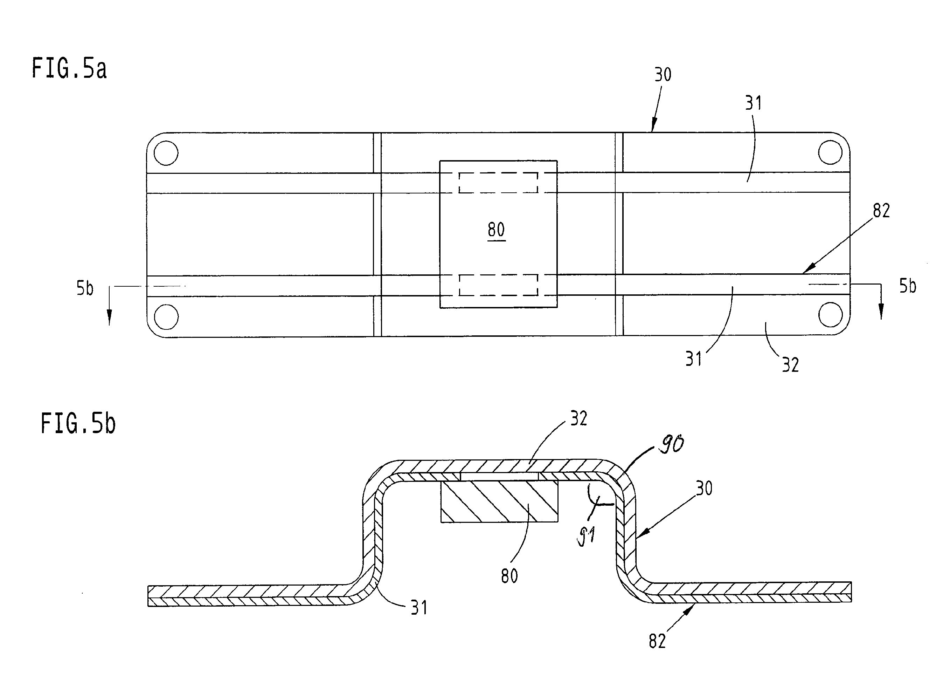

Fig. 5a, 5b zeigen die Herstellung eines Gegenstandes 30, der aus einem Gehäuse 32 besteht, in dem ein Funktionselement 80, z.B. ein elektronisches Bauteil angeordnet ist. Leiterbahnen 31 aus dem Anschlussmaterial 82 können in das Gehäuse eingebettet werden, in dem auch diese Leiterbahnen Tropfen für Tropfen erstellt werden. Diese Leiterbahnen 31 können z.B. aus entsprechenden Lötmaterialien hergestellt werden, die während des Herstellungsverfahrens mit einem zweiten Austragskopf z.B. auf dieselbe Art wie die anderen Materialien aufgebracht werden und von den Materialien der Wandung umschlossen werden. Gehäuse 32 als auch Leiterbahnen 31 bilden dabei Übergangsbereiche 90 mit Überhangstrukturen mit einem Winkel 91 von größer gleich 60° zur Ausgangsstruktur.

Die bisherigen Ausführungsbeispiele haben den Vorteil, dass Bauteile durch Umhüllung eingebettet werden. Das einzubettende Teil wird vorzugsweise gemäß Fig. 7 auf einer Fünfachsgeometrie zur Herstellung des Gegenstandes 150 positioniert. Auf dem Objektträger 100 befindet sich z.B. ein Werkstückadapter 60, der den Gegenstand 150 trägt. Der Objektträger ist seinerseits auf einem Winkeltisch 232 gelagert, der wiederum auf einem Koordinatentisch 210 abgestützt ist. Der Koordinatentisch 210 erlaubt eine Bewegung des den Objektträger 100 tragenden Drehtischs in drei Koordinatenrichtungen. Die Antriebe für die Bewegung der Schlitten des Koordinatentisches entlang den drei Koordinatenrichtungen sind der Einfachheit halber weggelassen. Am Drehtisch 220 ist an einer vorzugsweise 45°-Schräge 240 ein Winkeltisch 232 ebenfalls mit einer vorzugsweise 45°-Schräge über einen Drehmotor 231 drehbar gelagert. Am Winkeltisch 232 ist dann der Objektträger 100 über den Drehmotor 230 drehbar gelagert. Durch Überlagerung der durch die Drehmotoren 230, 231 möglichen Bewegungen werden verschiedenste Positionen des Objektträgers 100 ansteuerbar, um den Gegenstand selbsttragend herzustellen.

Die Grundwerkstoffe werden durch eine Plastifiziereinheit aufbereitet, wie dies aus der Spritzgießtechnik bekannt ist. Diese Plastifiziereinheit unterscheidet sich von den sonst bei der 3D-Fertigung üblichen Vorrichtungen, wie z.B. den beim 3D-Druck üblichen Druckköpfen dadurch, dass keine vorgefertigten Materialien zugeführt werden. In der Spritzgießtechnik bedeutet ein Plastifizieren mittels einer Plastifiziereinheit nämlich ein Aufbereiten, Mischen und Homogenisieren des Ausgangsmaterials. Mit anderen Worten wird also das meist rieselfähige Ausgangsmaterial in den Aggregatzustand der Schmelze aufbereitet. Genau dies erfolgt auch erfindungsgemäß, so dass standardmäßig vorhandene Materialien verwendet werden können. Durch diese individuelle Aufbereitung der Grundwerkstoffe wie zum Beispiel Thermoplaste, Duroplaste oder viskose Materialien wie Silikone aber auch andere Materialien wie zum Beispiel Lötzinn können diese individuell verflüssigt werden und dann aneinandergesetzt werden, wobei sie sich schichtweise überlappen und verbinden. Zusätzlich zur Adhäsion der unterschiedlichen Werkstoffe können damit durch mechanische Überlappung Festigkeiten erreicht werden, die an die Grundwerte der einzelnen Materialien herangehen.

Die Materialien werden unmittelbar aus einem unter Druck stehenden bzw. setzbaren Materialspeicher vorzugsweise tropfenweise ausgetragen. Der Druck liegt dabei vorzugsweise in einer Höhe, wie er aus der Spritzgießtechnik von Kunststoffen bekannt ist, d.h. bei mindestens 10 MPa bis 100 MPa. Die verwendeten Materialien besitzen regelmäßig eine dynamische Viskositätszahl des verfestigbaren Materials zwischen 100 und 100000 [Pa s], wobei vorzugsweise das verfestigbare Material ein in der Spritzgießtechnik üblicher Kunststoff oder ein Harz ist. Dies macht die Verarbeitung aus dem unter Druck setzbaren Materialspeicher erforderlich, da Drücke von mehr als 10 bis 100 MPa (100 bis 1000 bar) ohne weiteres erforderlich sind, insbesondere wenn zur Erzielung kleiner Tropfenvolumen kleine Austragsöffnungen eingesetzt werden.

Fig. 6a bis 6d zeigt die Herstellung eines selbsttragenden Gegenstandes wie zum Beispiel eines kugelförmigen Gegenstandes 10 mit einer Wandung 13 die einen hohlen Innenraum 12 umgibt. Ausgehend von einem Werkstückadapter 60 wird der Gegenstand 10 Punkt für Punkt bzw. Tropfen für Tropfen 70 gemäß Fig. 6a aufgebaut. Deutlich ist zu erkennen, dass der Austragskopf 15 vertikal stehen bleibt, während der herzustellende Gegenstand unter dem Austragskopf bewegt wird. So kann ausgehend vom Werkstückadapter 60 eine Überhangstruktur nach außen und damit ein Übergangsbereich 90 mit einem Winkel 91 von mehr als 60° in diesem Fall zum Werkstückadapter 60 ohne weitere Hilfsmittel aus kleinen, in situ verschmelzenden und selbsttätig ohne Kühlung aneinander gefügten Tropfen 70 gebildet werden. So entsteht gemäß Fig. 6b zunächst eine Halbkugel, die dann gemäß Fig. 6c weitergeformt wird. Spätestens an dieser Stelle hätten die meisten üblichen Systeme Probleme, da das Material nicht selbsttragend aufgebracht werden kann. Durch die Beeinflussung sowohl des Materials tropfenweise als auch die Anordnung des Gegenstands auf der Mehrachsgeometrie gemäß Fig. 7 ist es jedoch möglich, die Wandung 13 selbsttragend aufzubauen und wie bei einem Gewölbe letztendlich einen Schlusstropfen aufzusetzen, um den Gegenstand gemäß Fig. 6d herzustellen. Damit lassen sich durch die sich in situ verfestigten Tropfen geschlossene Körper wie zum Beispiel derartige Kugeln mit höchster Oberflächenqualität erstellen. Durch die räumliche Bewegung ist es möglich, die Tropfen annähernd senkrecht auf die bestehende Fläche bzw. Wandung 13 treffen zu lassen. Demgegenüber wäre beim Lasersintern der Innenraum grundsätzlich mit Pulver gefüllt und somit nicht geschlossen herstellbar. Beim Fadenaustragsverfahren ist im Außen- bzw. Innenbereich eine Stützstruktur notwendig, da das Teil nicht im Raum bewegt wird und für den Faden im letzten Teilbereich keine Stützfläche vorhanden ist.

Bei den Figuren 3 und 4 kommt das Lasersintern bei derartigen aus polymeren Materialien hergestellten Teilen an seine Grenzen, da Mehrkomponententeile im Pulverbett nicht herzustellen sind. Beim Fadenaustragsverfahren sind vor allem weiche Materialien selbsttragend nicht verarbeitbar, da die Grundstabilität bei der Materialzufuhr nicht vorhanden ist.

Der Werkstückadapter 60 gemäß Fig. 6e bietet eine geometrische Definition eines Ausgangspunktes, der sich auf der einen Seite an einer festen Aufnahme im Objektträger orientiert. Auf der anderen Seite bietet er die Basis für die Herstellung des Gegenstandes und wird auch zunächst ein Teil des Gegenstands, sodass der Gegenstand lagegenau bzw. lageorientiert weiterverarbeitet werden kann. Diese weitere Verarbeitung kann zum Beispiel eine mechanische Nachbearbeitung sein oder ein weiterer Fertigungsschritt mit dem Auftragen weiterer Materialschichten wie zum Beispiel Lackbeschichtungen in einer anderen Maschine mit einem anderen Material. Auch das lagegerechte Montieren oder ein Vorgang wie die Vermessung des Werkstücks zur Qualitätssicherung sind mögliche weitere Verarbeitungsschritte.

Grundsätzlich kann der Gegenstand aus beliebigen Materialien hergestellt werden, wobei vorzugsweise in der Spritzgießtechnik übliche und damit günstig zu beschaffende Materialien und Zusätze verwendet werden, da diese als Massengut erhältlich sind. Grundsätzlich können aber auch andere Materialien wie z.B. Medikamente oder Materialien aus der Süßwarenindustrie verarbeitet werden, wobei es von Vorteil ist, wenn die Materialien sich bei der Temperatur des Bauraums verfestigen.

### Bezugszeichenliste

- 10, 20, 20', 30, 40, 50: Gegenstand
- 11: Übergangszone
- 12: Innenraum
- 13: Wandung
- 14, 14': Abdeckung
- 31: Leiterbahn
- 32: Gehäuse
- 60: Werkstückadapter
- 70: Tropfen
- 80: Funktionselement
- 81: Anschlüsse
- 82: Anschlussmaterial
- 83: zweite Komponente
- 90: Übergangsbereich
- 91: Winkel
- 100: Objektträger
- 150: Gegenstand (Fig. 7)
- 200: Gestell
- 210: Koordinatentisch
- 220: Drehtisch horizontal/vertikal
- 230: Drehmotor Objektträger
- 231: Drehmotor Winkeltisch
- 232: Winkeltisch
- 240: 45° Schräge

## Patentansprüche

1. Dreidimensionaler Gegenstand (10, 20, 20', 30, 40, 50) mit wenigstens einer einen Innenraum (12) umgebenden Wandung (13) aus in situ selbsttätig verfestigten Tropfen (70) aus wenigstens einem Material, das im Ausgangszustand in einer fluiden Phase vorliegt oder verflüssigt werden kann,
**dadurch gekennzeichnet, dass** die Wandung (13) bei ihrer Herstellung in jedem Bauzustand selbsttragend ist, wobei der Gegenstand wenigstens einen Übergangsbereich (90) von einer Grundstruktur zu einer Überhangstruktur mit einem Winkel (91) von größer gleich 60°, vorzugsweise größer gleich 70° aufweist.

2. Gegenstand nach Anspruch 1, **dadurch gekennzeichnet, dass** der Gegenstand zumindest im Übergangsbereich (90) keinen Tropfenversatz aufweist.

3. Gegenstand nach Anspruch 1 oder 2, **dadurch gekennzeichnet, dass** er ein erkennbares Gefüge von miteinander verschmolzenen Tropfen aufweist, deren Größe zwischen 0,001 und 0,1, vorzugsweise bis maximal 0,05 mm³ beträgt.

4. Gegenstand nach einem der vorhergehenden Ansprüche, **dadurch gekennzeichnet, dass** er durch ein Verfahren zum sequenziellen Austragen von Tropfen (70) für Tropfen mittels eines feststehenden Austragskopfes (15) je zu verarbeitenden Material erhalten ist, während der Gegenstand (10, 20, 20', 30, 40, 50) bei seiner Herstellung relativ zum Austragskopf (15) auf einem um wenigstens fünf Achsen bewegbaren Objektträger (100) gehalten ist.

5. Gegenstand nach einem der vorhergehenden Ansprüche, **dadurch gekennzeichnet, dass** der Innenraum (12) ein Hohlraum ist, der ohne Füllstruktur aufgebaut ist.

6. Gegenstand nach einem der vorhergehenden Ansprüche, **dadurch gekennzeichnet, dass** der Innenraum (12) des Gegenstands (10) mit einem bei der Herstellung des Gegenstand eingebrachtem Medium oder Einsatzteil zumindest teilweise gefüllt ist.

7. Gegenstand nach einem der Ansprüche 1 bis 4, **dadurch gekennzeichnet, dass** die Wandung (13) ein im Innenraum (12) angeordnetes Funktionselement (80) formschlüssig einbettet.

8. Gegenstand nach einem der vorhergehenden Ansprüche, **dadurch gekennzeichnet, dass** die Wandung (13) mehrere formschlüssig miteinander verbundene Materialen aufweist, wobei die formschlüssige Verbindung zumindest auf mikroskopischer Ebene vorhanden ist.

9. Gegenstand nach Anspruch 7 oder 8, **dadurch gekennzeichnet, dass** das Funktionselement (80) in situ mit der Wandung (13) und einer Abdeckung (14) verschlossen ist, wobei Wandung und Abdeckung aus wenigstens einem Material bestehen und durch die in situ nebeneinander aufgebrachten verfestigten Tropfen ineinander übergehen.

10. Gegenstand nach einem der vorhergehenden Ansprüche, **dadurch gekennzeichnet, dass** wenigstens ein weiteres Material ein elektrisch leitfähiges Anschlussmaterial als Leitungselement ist, das im Innenraum (12) angeordnet ist.

11. Gegenstand nach Anspruch 10, **dadurch gekennzeichnet, dass** das Funktionselement (80) über aus dem Anschlussmaterial (82) gebildete Leiterbahnen (31) kontaktiert ist.

12. Gegenstand nach einem der vorhergehenden Ansprüche, **dadurch gekennzeichnet, dass** der Gegenstand (10, 20, 20', 30, 40, 50) auf einem am Objektträger (100) geometrisch festlegbaren Werkstückadapter (60) erhalten wird.

13. Gegenstand nach einem der vorhergehenden Ansprüche, **dadurch gekennzeichnet, dass** das wenigstens eine Material ein in der Spritzgießtechnik übliches ist, das oder der mittels einer Plastifiziereinheit aufbereitet, gemischt und homogenisiert ist.
